# EUROPÄISCHE PATENTSCHRIFT

(11) **EP 2 881 225 B1**
(45) Veröffentlichungstag und Bekanntmachung des Hinweises auf die Patenterteilung: **04.05.2022**
(21) Anmeldenummer: 14003797.9
(22) Anmeldetag: 11.11.2014
(51) Int. Cl.: B25J 9/16

(54) **Verfahren und Steuermittel zum Steuern eines Roboters**
Method and control element for controlling a robot
Procédé et moyen de commande destinés à commander un robot

(30) Priorität: 04.12.2013 DE 102013020697
(43) Veröffentlichungstag der Anmeldung: 10.06.2015
(73) Patentinhaber: KUKA Deutschland GmbH, 86165 Augsburg (DE)
(72) Erfinder: Bonin, Uwe, 86316 Friedberg (DE)
(74) Vertreter: Schlotter, Alexander Carolus Paul

(56) Entgegenhaltungen:
- EP-A1- 1 857 229
- EP-A2- 1 304 604
- US-A1- 2003 192 758
- US-A1- 2012 310 411

## Beschreibung

Die vorliegende Erfindung betrifft ein Verfahren und Steuermittel zum Steuern eines Roboters, eine Roboteranordnung mit einem Roboter und einem solchen Steuermittel sowie ein Computerprogrammprodukt zur Durchführung eines solchen Verfahrens. Roboter weisen nach betriebsinterner Praxis Haltebremsen auf. Diese können im Normalbetrieb geschlossen werden, beispielsweise, um während eines Stillstands des Roboters Energie zu sparen oder seine Haltepose zu sichern. Roboter aufweisend Haltembremsen sind auch aus z.B. EP 1 857 229 A und EP 1 304 604 A2 bekannt.

Insbesondere bei einer ungeplanten Präsenz eines Hindernisses im Arbeitsbereich eines Roboters kann dieser mit dem Hindernis kollidieren und es dabei einklemmen. Nach betriebsinterner Praxis ist es daher bekannt, den Roboter auf Kollisionen zu überwachen und bei Auftreten einer Kollision überwachungsbedingt mittels der Haltebremsen sicher stillzusetzen. Hat der Roboter dabei das Hindernis eingeklemmt, wird diese Klemmung durch die Haltebremsen aufrechterhalten.

Insbesondere daher ist es nach betriebsinterner Praxis bekannt, mechanische Freidreheinrichtungen vorzusehen oder den Roboter nachgiebig, insbesondere gravitationskompensierend, zu regeln, so dass er aktiv verschoben oder wenigstens infolge der Klemm(reaktions)kraft ausweichen und so die Klemmung auflösen oder jedenfalls reduzieren kann.

Eine Aufgabe der vorliegenden Erfindung ist es, den Betrieb eines Roboters zu verbessern. Diese Aufgabe wird durch ein Verfahren mit den Merkmalen des Anspruchs 1 gelöst. Ansprüche 9 bis 11 stellen ein Steuermittel bzw. Computerprogrammprodukt zur Durchführung eines entsprechenden Verfahrens bzw. eine Roboteranordnung mit einem entsprechenden Steuermittel unter Schutz. Die Unteransprüche betreffen vorteilhafte Weiterbildungen.

Eine Roboteranordnung nach der vorliegenden Erfindung weist einen Roboter und ein Steuermittel zum Steuern des Roboters auf.

Der Roboter weist eine Achsenanordnung mit einer oder mehreren, insbesondere wenigstens sechs, (Bewegungs)Achsen mit je einem Antrieb und einer Haltebremse auf.

Eine oder mehrere, insbesondere alle Achsen können in einer Ausführung, insbesondere paarweise aufeinander senkrecht stehende, Drehachsen bzw. der Roboter ein sogenannter Knickarmroboter sein. Gleichermaßen können eine oder mehrere Achsen Linearachsen sein.

Ein Achsantrieb kann in einer Ausführung einen oder mehrere Motoren, insbesondere Elektromotoren, und/oder Getriebe aufweisen.

Eine Haltebremse ist in einer Ausführung zum Stillsetzen bzw. Festlegen der Achse vorgesehen bzw. eingerichtet, in einer Ausführung als Notfall- und/oder Feststellbremse. Sie kann insbesondere eine mechanische oder hydraulische Reibungsbremse aufweisen, insbesondere sein. In einer Ausführung ist die Haltebremse eine normalerweise bzw. unaktuiert geschlossene bzw. aktiv gelüftete Bremse, die insbesondere bei Trennung von einer Energieversorgung selbsttätig schließt.

Das Steuermittel ist zum Steuern des Roboters vorgesehen bzw. hard- und/oder Software- bzw. programmtechnisch eingerichtet. Zur kompakteren Darstellung wird vorliegend auch ein Regeln bzw. ein Ausgeben von Steuergrößen auf Basis von vorgegebenen Soll- und erfassten Ist-Größen, verallgemeinernd als Steuern bezeichnet.

Ein Mittel im Sinne der vorliegenden Erfindung kann hard- und/oder software- bzw. programmtechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern kann.

In einer Ausführung wird, insbesondere durch ein hierzu hardware-, insbesondere sensortechnisch, und/oder software- bzw. programmtechnisch eingerichtetes Überwachungsmittel des Steuermittels, ein Betrieb des Roboters, insbesondere der Roboter und/oder seine Umgebung überwacht, insbesondere auf eine Kollision mit einem Hindernis.

Hierzu können in einer Ausführung ein oder mehrere Kraftsensoren, insbesondere Drehmomentsensoren, des Überwachungsmittels am Roboter auf den Roboter wirkende Kontaktkräfte und/oder Achslasten seiner Achsenanordnung erfassen bzw. hierzu eingerichtet sein. Zusätzlich oder alternativ können ein oder mehrere Schutzeinrichtungssensoren des Überwachungsmittels, insbesondere Schutztürkontakte, Not-Aus-Eingabemittel oder dergleichen, eine Schutzeinrichtung der Roboteranordnung überwachen bzw. hierzu eingerichtet sein. Zusätzlich oder alternativ können ein oder mehrere, insbesondere optische, thermische, akustische, elektrische und/oder magnetische Umgebungsüberwachungssensoren des Überwachungsmittels eine Umgebung des Roboters, insbesondere auf nicht vorgesehene Hindernisse, überwachen bzw. hierzu eingerichtet sein.

Allgemein kann eine Überwachung insbesondere eine, insbesondere kraft-, insbesondere drehmoment-, vorzugsweise achslastbasierte, Kollisionsüberwachung umfassen, insbesondere eine, insbesondere kraft-, insbesondere drehmoment-, vorzugsweise achslastbasierte, Kollisionsüberwachung sein.

Falls die Überwachung bzw. das Überwachungsmittel einen Fehlerfall, insbesondere eine Kollision, erfasst, werden ein oder mehrere Achsen des Roboters, in einer Ausführung selektiv eine oder mehrere ausgewählte Achsen der Achsen des Roboters, in einer anderen Ausführung alle Achsen des Roboters, durch die entsprechenden Haltebremsen stillgesetzt bzw. festgelegt, insbesondere, indem das Überwachungsmittel ein Schließen der Haltebremse(n) kommandiert. Insbesondere ein Stillsetzen bzw. Festlegen von einer Achse des Roboters durch deren Haltebremse infolge der Erfassung eines Fehlerfalls, insbesondere einer Kollision des Roboters, durch eine Überwachung bzw. das Überwachungsmittel wird als überwachungsbedingtes Schließen dieser Haltebremse im Sinne der vorliegenden Erfindung bezeichnet.

Zusätzlich oder alternativ zu einem überwachungsbedingten Schließen kann in einer Ausführung ein vorgabebedingten Schließen erfolgen bzw. vorgesehen sein, insbesondere ein Schließen auf Basis eines vorgegebenen Schließbefehls in einem Roboterprogramm, das abgearbeitet bzw. ausgeführt wird, und/oder auf Basis einer, insbesondere manuellen, Benutzereingabe während des Betriebs. Falls, insbesondere durch ein Roboterprogramm oder eine Benutzereingabe während des Betriebs, ein Schließen vorgegeben wird bzw. ist, werden ein oder mehrere Achsen des Roboters, in einer Ausführung selektiv eine oder mehrere ausgewählte Achsen der Achsen des Roboters, in einer anderen Ausführung alle Achsen des Roboters, durch die entsprechenden Haltebremsen stillgesetzt bzw. festgelegt, insbesondere, indem ein hierzu hardware-, insbesondere sensortechnisch, und/oder software- bzw. programmtechnisch eingerichtetes Haltebremsenschließmittel des Steuermittels ein Schließen der Haltebremse(n) kommandiert. Insbesondere ein Stillsetzen bzw. Festlegen von einer Achse des Roboters durch deren Haltebremse infolge einer programmtechnischen und/oder manuellen Vor- bzw. Eingabe durch das Steuermittel wird als vorgabebedingtes Schließen dieser Haltebremse im Sinne der vorliegenden Erfindung bezeichnet. Zur kompakteren Darstellung wird vorliegend auch ein Überwachungsmittel, das dazu eingerichtet ist, ein Schließen der Haltebremse(n) infolge der Erfassung eines Fehlerfalls zu kommandieren, verallgemeinernd als Haltebremsenschließmittel bezeichnet. Zusätzlich oder alternativ kann ein Haltebremsenschließmittel dazu eingerichtet sein, ein vorgabebedingtes Schließen auf Basis eines vorgegebenen Schließbefehls in einem Roboterprogramm und/oder einer Benutzereingabe zu kommandieren.

Vor einem überwachungs- und/oder vorgabebedingten Schließen können bewegte Achsen durch die entsprechenden, gegenläufig bzw. bremsend aktuierten, Antriebe und/oder die Haltebremsen, vorzugsweise wenigstens im Wesentlichen bis zum Stillstand, abgebremst werden. Entsprechend können Haltebremsen in einer Ausführung bewegte Achsen bremsen oder auch erst bei, wenigstens im Wesentlichen stillstehenden Achsen einfallen bzw. geschlossen werden, insbesondere durch ein hierzu hardware-, insbesondere sensortechnisch, und/oder software- bzw. programmtechnisch eingerichtetes Haltebremsenschließ-, insbesondere Überwachungsmittel.

Nach einem Aspekt der vorliegenden Erfindung werden, insbesondere durch ein hierzu hardware- und/oder software- bzw. programmtechnisch eingerichtetes Haltebremsenöffnungsmittel des Steuermittels, eine oder mehrere, insbesondere selektiv eine oder mehrere ausgewählte oder alle Haltebremsen des Roboters erneut geöffnet, nachdem sie zuvor, insbesondere überwachungs- oder vorgabebedingt, geschlossen worden sind. Gleichermaßen können eine oder mehrere, insbesondere selektiv eine oder mehrere ausgewählte oder alle Haltebremsen des Roboters vor dem, insbesondere überwachungs- oder vorgabebedingten, Schließen in nachfolgend näher erläuterter Weise noch geöffnet bleiben bzw. ihr, insbesondere überwachungs- oder vorgabebedingtes, Schließen verzögert bzw. verschoben werden.

Indem Haltebremsen nach einem, insbesondere überwachungs- oder vorgabebedingten, Schließen erneut geöffnet werden oder ihr, insbesondere überwachungs- oder vorgabebedingtes, Schließen verzögert wird, kann in einer Ausführung vorteilhafterweise eine Klemmung eines Hindernisses durch einen Roboter, insbesondere ein Einklemmen des Hindernisses zwischen dem Roboter und einer Umgebung, aufgelöst oder jedenfalls reduziert werden, indem die entsprechende(n) Achse(n) des Roboters durch die Klemm(reaktions)kraft und/oder aktiv durch eine entsprechende Befreiungskraft bewegt und so die Klemm(reaktions)kraft reduziert, vorzugsweise abgebaut wird. Beispielsweise kann eine durch den Roboter eingeklemmte Person den Roboter "wegschieben" und sich so befreien oder wenigstens ihre Belastung reduzieren, während die Haltebremse(n) erneut oder noch geöffnet sind, bevor diese, insbesondere überwachungs- oder vorgabebedingt, (erneut) geschlossen werden.

Nach einem Aspekt der vorliegenden Erfindung werden eine oder mehrere, insbesondere überwachungs- oder vorgabebedingt, geschlossene Haltebremsen des Roboters für eine vorgegebene Dauer erneut geöffnet oder bleiben vor dem, insbesondere überwachungs- oder vorgabebedingten, Schließen für eine vorgegebene Dauer geöffnet.

Hierdurch kann in einer Ausführung auf einfache und/oder sichere Weise eine Klemmung reduziert, insbesondere aufgelöst werden.

In einer Ausführung beträgt die vorgegebene Dauer für wenigstens eine Haltebremse höchstens 2 Sekunden, insbesondere höchstens 1,5 Sekunden, vorzugsweise höchstens 1,2 Sekunde. Hierdurch kann in einer Ausführung insbesondere ein schwerkraftbedingtes Zusammensacken des Roboters reduziert werden. Zusätzlich oder alternativ kann die Dauer für diese Haltebremse wenigstens 0,05 Sekunden, insbesondere wenigstens 0,1 Sekunden und vorzugsweise wenigstens 0,15 Sekunden betragen. Hierdurch kann in einer Ausführung eine Klemmung ausreichend reduziert werden.

Eine Dauer im Sinne der vorliegenden Erfindung kann insbesondere eine Zeitdauer, aber auch eine (Steuer)Taktanzahl oder dergleichen, sein.

Die Dauer kann in einer Ausführung achsenabhängig vorgegeben werden bzw. sein. Insbesondere kann der Roboter wenigstens zwei Achsen mit Haltebremsen aufweisen, wobei die vorgegebene Dauer für die eine Achse, insbesondere stets oder situationsabhängig, länger sein kann als die vorgegebene Dauer für die andere Achse. Insbesondere kann eine minimale und/oder eine maximale vorgegebene Dauer für die eine Achse länger sein als eine minimale und/oder eine maximale vorgegebene Dauer für die andere Achse. Hierdurch kann in einer Ausführung, insbesondere in nachfolgend näher erläuterter Weise, achsspezifisch und somit besser reagiert werden.

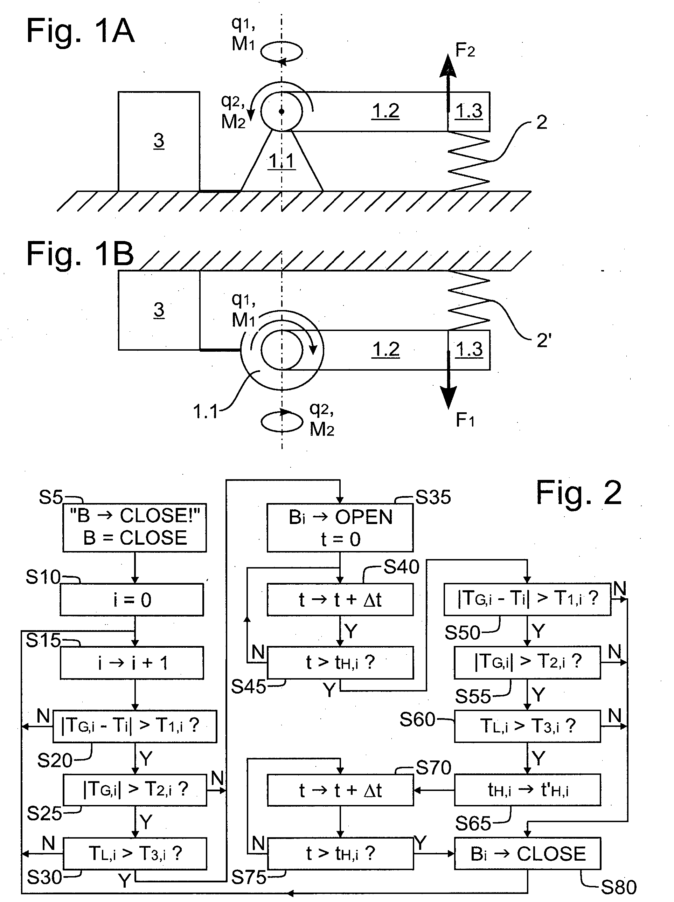

Achsen von Robotern können - potentiell oder aktuell - schwerkraftbelastet sein oder nicht. Unter einer schwerkraftbelasteten Achse wird vorliegend insbesondere eine Achse verstanden, die sich bei geöffneter Haltebremse infolge der Schwerkraft, insbesondere der Gewichtskraft einer Roboter(teil)struktur bzw. -kinematik, die durch diese Achse angelenkt bzw. beweglich ist, zu bewegen sucht bzw. - insbesondere bei Überwindung etwaiger Reibungen - bewegt bzw. in Bewegung setzt. Beispielsweise ist eine vertikale Drehachse eines eingliedrigen Roboters mit nur dieser Drehachse eine nicht schwerkraftbelastete Achse, da sich diese Achse unabhängig von der Pose des Roboters auch bei geöffneter Haltebremse nicht schwerkraft- bzw. eigengewichtbedingt bewegt. Hingegen ist die horizontale Drehachse q₂ des Roboterarms 1.2 eines zweigliedrigen Roboters, wie er in Fig. 1 dargestellt ist, eine stets wenigstens potentiell schwerkraftbelastete Achse, da diese Achse sich außer in einer vertikal herabhängenden, stabilen, und einer vertikal nach oben gestreckten, instabilen, Pose bei geöffneter Haltebremse schwerkraftbedingt bzw. infolge des Eigengewichts des Roboterarms bewegt bzw. bei Überwindung etwaiger Reibungen in Bewegung setzt. In einer nicht vertikalen Pose, insbesondere in der in Fig. 1 dargestellten horizontal ausgestreckten Pose, ist diese Achse entsprechend eine aktuell schwerkraftbelastete Achse, in einer herabhängenden und einer vertikal nach oben gestreckten Pose hingegen eine nur potentiell schwerkraftbelastete Achse.

Bei einem erfindungsgemäßen erneuten Öffnen einer zuvor, insbesondere überwachungs- oder vorgabebedingt, geschlossenen Haltebremse bzw. einem Verzögern eines, insbesondere überwachungs- oder vorgabebedingten, Schließens für eine vorgegebene Dauer kann insbesondere zwischen potentiell oder aktuell schwerkraftbelasteten und nicht schwerkraftbelasteten Achsen unterschieden werden. Für eine nicht, insbesondere potentiell oder aktuell, schwerkraftbelastete Achse kann in einer Ausführung eine längere Dauer vorgegeben werden als für eine, insbesondere potentiell oder aktuell, schwerkraftbelastete Achse, da die nicht schwerkraftbelastete Achse auch bei längerem (erneuten) Öffnen nicht zu einem Zusammensacken des Roboters führt.

Insbesondere für eine potentiell oder aktuell schwerkraftbelastete Achse kann die Dauer in Abhängigkeit von einer Pose des Roboters und/oder derart vorgegeben sein, dass eine schwerkraftbedingten Bewegung der Achse während der Dauer begrenzt ist, vorzugsweise auf einen Winkelbereich von höchstens 30°, insbesondere höchstens 15°, vorzugsweise höchstens 5°.

Unter einer Pose wird vorliegend insbesondere in fachüblicher Weise die Stellung bzw. Position, insbesondere Winkellage, einer oder mehrerer, insbesondere aller Achsen des Roboters verstanden.

Eine Achse kann je nach Pose unterschiedlich stark schwerkraftbelastet sein. So wirkt beispielsweise in der in Fig. 1 dargestellten Pose aufgrund des ausgestreckten Roboterarms dessen Eigengewicht mit maximalem Hebelarm. Entsprechend kann hier beispielsweise die Haltebremse für eine kürzere Dauer erneut geöffnet werden oder vor dem, insbesondere überwachungs- oder vorgabebedingten, Schließen geöffnet bleiben. Bei einer hiergegen um 45° verdrehten Pose wirkt hingegen nur noch der halbe Hebelarm, so dass hier die Haltebremse für eine längere Dauer erneut geöffnet werden oder vor dem, insbesondere überwachungs- oderbedingten, Schließen geöffnet bleiben kann, ohne dass der Roboter übermäßig zusammensackt.

Für eine nicht, insbesondere potentiell oder aktuell, schwerkraftbelastete Achse kann die Dauern in einer Ausführung vorab vorgegeben und im Betrieb vorzugsweise nicht verändert werden.

Nach einem weiteren Aspekt der vorliegenden Erfindung werden eine oder mehrere, insbesondere überwachungs- oder vorgabebedingt, geschlossene Haltebremsen des Roboters in Abhängigkeit von einer Achslast erneut geöffnet oder bleiben vor dem, insbesondere überwachungs- oder vorgabebedingten, Schließen in Abhängigkeit von einer Achslast geöffnet.

Eine Achslast kann insbesondere eine direkt auf die Achse wirkende Kraft umfassen, insbesondere sein. Zur kompakteren Darstellung wird auch ein antiparalleles Kräftepaar, d.h. ein Drehmoment, verallgemeinernd als Kraft im Sinne der vorliegenden Erfindung bezeichnet. Eine Achslast kann also insbesondere auch ein Achs- bzw. Gelenkmoment umfassen, insbesondere sein, das in einer Ausführung durch einen entsprechenden Kraft-, insbesondere (Gelenk)Momentensensor erfasst wird. Gleichermaßen kann eine Achslast in einer Ausführung eine von außen auf ein Roboterglied und somit nur indirekt auf die Achse(n) wirkende Kraft umfassen, insbesondere sein. Eine solche (indirekte) Achslast kann in einer Ausführung durch einen entsprechenden Kraft-, insbesondere Kraft-Momenten-Sensor erfasst werden, der in einer Weiterbildung zwischen einem Werkzeugflansch und einem robotergeführten Werkzeug angeordnet sein kann. Auf diese Weise kann insbesondere eine Klemmung durch ein robotergeführtes Werkzeug erfasst und reduziert werden. Vorzugsweise wird als Achslast eine vor der bzw. auf die Haltebremse wirkende Achslast erfasst, beispielsweise ein Torsionsmoment in einer haltegebremsten Welle, eine Lagerlast der Haltebremse oder dergleichen.

Gemäß diesem Aspekt kann in einer Ausführung auf situationsangepasste und dadurch bessere Weise eine Klemmung reduziert, insbesondere aufgelöst werden.

Erfindungsgemäß wird die Haltebremse erneut geöffnet werden oder vor dem Schließen geöffnet bleiben, wenn, insbesondere falls oder solange, die Achslast oder eine Abweichung der Achslast von einer Lastvorgabe einen Schwellwert übersteigt und/oder die Achslast in einer bestimmten Lastrichtung wirkt. Der Schwellwert und/oder die Lastvorgabe kann, insbesondere für eine nicht potentiell oder aktuell schwerkraftbelaste Achse, fest oder variabel vorgegeben, insbesondere vorab eingestellt werden. Insbesondere für eine potentiell oder aktuell schwerkraftbelastete Achse können in einer Ausführung der Schwellwert und/oder die Lastvorgabe posenabhängig, insbesondere modellbasiert, vorgegeben werden.

Die Lastvorgabe kann in einer Ausführung eine schwerkraftbedingte bzw. aus dem Gewicht der durch die Achse angelenkten Roboter(teil)struktur bzw. -kinematik resultierende Achslast umfassen, insbesondere sein, und/oderposenabhängig bestimmt werden, insbesondere mittels eines mechanischen Ersatzmodells des Roboters oder einer Vorabmessung, vorzugsweise unter Berücksichtigung von Reibung.

Klemmt der Roboter ein Hindernis, weicht die tatsächliche, erfasste Achslast infolge dieser Klemmung von dieser schwerkraftbedingten Achslast bzw. Lastvorgabe ab. Betrachtet man wiederum das Beispiel der Fig. 1, so wirkt die Kraft einer durch den Roboter geklemmten Feder 2 der Gewichtskraft des Roboterarms 1.2 entgegen und reduziert diese. Entsprechend kann in einer Ausführung die Haltebremse der Achse q₂ erneut geöffnet werden oder vor dem, insbesondere überwachungsbedingten, Schließen geöffnet bleiben, wenn, insbesondere falls oder solange, die Abweichung der Achslast in Form eines Gelenkmoments M₂ oder einer Kraft F₂ am Werkzeugflansch von einer schwerkraftbedingten Lastvorgabe einen Schwellwert übersteigt.

Zusätzlich oder alternativ zu einem solchen, insbesondere modellbasierten, Schwellwert für eine Achslast oder für deren Abweichung von einer, insbesondere modellbasierten, Lastvorgabe kann die Haltebremse erneut geöffnet werden oder vor dem, insbesondere überwachungs- oder vorgabebedingten, Schließen geöffnet bleiben, wenn, insbesondere falls oder solange, die Achslast in einer bestimmten Lastrichtung wirkt. Im Beispiel der Fig. 1 sucht die Gewichtskraft des Roboterarms 1.2 diesen im Uhrzeigersinn zu verdrehen. Die Kraft der durch den Roboter geklemmten Feder 2 wirkt dem entgegen. Übersteigt das aus ihr resultierende Drehmoment das aus der Gewichtskraft des Arms resultierende Drehmoment in der Achse q₂, so sackt der Roboter bzw. dessen Arm 1.2 auch bei geöffneter Haltebremse der Achse q₂ nicht nach unten zusammen, sondern wird durch die Feder 2 gehalten und sogar entgegen dem Uhrzeigersinn verdreht, so dass die Klemmung reduziert wird. Dementsprechend kann allgemein die bestimmte Lastrichtung diejenige Bewegungs-, insbesondere Drehrichtung der Achse sein, die einer schwerkraftbedingten bzw. aus dem Gewicht der durch die Achse angelenkten Roboter(teil)struktur bzw. -kinematik resultierende Bewegungs-, insbesondere Drehmomentrichtung entgegengesetzt ist.

Am Beispiel der Fig. 1 wird auch deutlich, dass die Schwellwerte bzw. Lastvorgaben für die Achsen q₁, q₂ vorteilhaft unterschiedlich bzw. achsenabhängig vorgegeben werden können: während die schwerkraftbedingte Achslast bzw. Lastvorgabe und die entsprechende Lastrichtung für die Achse q₂ posenabhängig ist, kann sie für die Achse q₁ vorab konstant vorgeben werden.

Die beiden vorstehend erläuterten Aspekte eines erneuten Öffnens nach einem, insbesondere überwachungs- oder vorgabebedingten, Schließen bzw. eines Geöffnet-Bleibens vor einem, insbesondere überwachungs- oder vorgabebedingten, Schließen wenigstens einer Haltebremse für eine vorgegebene Dauer einerseits und in Abhängigkeit von einer Achslast andererseits stellen unterschiedliche Umsetzungen desselben Konzepts dar. Entsprechend können sie unabhängig voneinander verwirklicht werden bzw. sein. In einer bevorzugten Ausführung sind beide Aspekte jedoch miteinander kombiniert, insbesondere in wenigstens einer der nachfolgend erläuterten Weisen.

So werden in einer Ausführung (nur) diejenigen Haltebremsen für eine vorgegebene Dauer erneut geöffnet bzw. bleiben vor dem, insbesondere überwachungs- oder vorgabebedingten, Schließen für eine vorgegebene Dauer geöffnet, bei denen eine entsprechende Achslast, insbesondere infolge einer Klemmung, wirksam ist bzw. die an einer Klemmung mitwirken. Dies kann insbesondere in Abhängigkeit von einer Achslast der jeweiligen Achse bestimmt werden. Wie vorstehend ausgeführt, weicht bei einer Klemmung eine erfasste Achslast von einer schwerkraftbedingten, insbesondere modellbasiert bestimmten, Lastvorgabe ab, sie kann insbesondere einer schwerkraftbedingten Achslast entgegenwirken. Entsprechend kann in einer Ausführung die Haltebremse für eine vorgegebene Dauer erneut geöffnet werden oder vor dem Schließen geöffnet bleiben, wenn die Achslast oder eine Abweichung der Achslast von einer, insbesondere posenabhängigen schwerkraftbedingten, Lastvorgabe einen, insbesondere posenabhängigen schwerkraftbedingten, Schwellwert übersteigt und/oder die Achslast in einer posenabhängigen schwerkraftbedingten Lastrichtung wirkt.

Auf diese Weise wird der Aspekt der Abhängigkeit von einer Achslast vorteilhaft zu dem Aspekt der vorgegebenen Dauer kombiniert.

In einer Ausführung wird bzw. bleibt eine Haltebremse, die in Abhängigkeit von einer Achslast erneut geöffnet wird bzw. vor einem, insbesondere überwachungs- oder vorgabebedingten, Schließen geöffnet bleibt, für eine vorgegebene Dauer geöffnet, insbesondere auch dann, wenn zwischenzeitlich die Achslast alleine kein erneutes Öffnen bzw. kein Geöffnet-Bleiben (mehr) bedingen würde. Auf diese Weise kann insbesondere eine zeitliche Hysterese implementiert werden bzw. sein, die einem ungewollten vorzeitigen Schließen der Haltebremse entgegenwirkt: wird bzw. bleibt die Haltebremse in Abhängigkeit von einer Achslast geöffnet, nimmt die erfasste Achslast infolge des Wegfalls des Widerstands bzw. Gegenwirkens der Haltebremse rapide ab. Durch die zeitliche Hysterese kann hier eine Mindestöffnungszeit gewährleistet werden.

Auf diese Weise wird der Aspekt der vorgegebene Dauer vorteilhaft zu dem Aspekt der Abhängigkeit von einer Achslast kombiniert.

In einer Ausführung wird die vorgegebenen Dauer in Abhängigkeit von einer Achslast des Roboters vorgegeben. Auf diese Weise wird der Aspekt der Abhängigkeit von einer Achslast vorteilhaft zu dem Aspekt der vorgegebenen Dauer kombiniert.

Insbesondere kann die vorgegebene Dauer verlängert werden, wenn nach einer ersten vorgegebenen Dauer die Achslast oder eine Abweichung der Achslast von einer, insbesondere posenabhängigen schwerkraftbedingten, Lastvorgabe, insbesondere weiterhin, einen, insbesondere vorgegebenen, insbesondere einstellbaren, und/oder achsen- und/oder posenabhängigen, insbesondere schwerkraftbedingten, Schwellwert übersteigt und/oder die Achslast in einer, insbesondere posenabhängigen und/oder schwerkraftbedingten, Lastrichtung wirkt. Somit kann in einer Ausführung zunächst, wie vorstehend erläutert, die Haltebremse jedenfalls für eine erste vorgegebene Dauer geöffnet werden bzw. bleiben. Wird nach deren Ablauf festgestellt, dass die Achslast bzw. deren Abweichung einen Schwellwert übersteigt und/oder die Achslast in einer bestimmten Lastrichtung wirkt, da beispielsweise weiterhin eine Klemmung vorliegt, kann diese Dauer, insbesondere einmalig oder auch mehrmals bzw. sukzessive, verlängert werden, insbesondere solange, bis nach Ablauf der verlängerten Dauer die Achslast bzw. deren Abweichung den Schwellwert nicht mehr übersteigt bzw. die Achslast nicht mehr in der bestimmten Lastrichtung wirkt.

Bei den vorstehend erläuterten Aspekten kann jeweils die Haltebremse erneut geöffnet werden bzw. vor dem Schließen geöffnet bleiben, während der Antrieb der Achse, insbesondere überwachungs- oder vorgabebedingt, wirkungslos, insbesondere von einer Energieversorgung getrennt, ist und/oder der Roboter, wenigstens im Wesentlichen stillsteht. Insbesondere kann also die Haltebremse bei einem sogenannten STOP 0 oder STOP 1 erneut geöffnet werden bzw. vor dem Schließen geöffnet bleiben. Auf diese Weise kann in einfacher und/oder situationsangepasster Weise eine Klemmung eines Hindernisses durch den Roboter, sogar bei wirkungslosen, insbesondere von einer Energieversorgung getrennten, Antrieben und somit in sehr sicherer Weise reduziert, vorzugsweise aufgelöst werden.

Weitere Vorteile und Merkmale ergeben sich aus den Unteransprüchen und den Ausführungsbeispielen. Hierzu zeigt, teilweise schematisiert:
- Fig. 1:: eine Roboteranordnung mit einem einfachen zweigliedrigen Roboter und einem Steuermittel nach einer Ausführung der vorliegenden Erfindung von der Seite (Fig. 1A) bzw. von oben (Fig. 1B); und
- Fig. 2:: den Ablauf eines Verfahrens zum Steuern des Roboters der Fig. 1 nach einer Ausführung der vorliegenden Erfindung.

Fig. 1 zeigt eine Roboteranordnung mit einem zu Illustrationszwecken nur zweigliedrigen Roboter und einem Steuermittel 3 nach einer Ausführung der vorliegenden Erfindung von der Seite (Fig. 1A) bzw. von oben (Fig. 1B).

Der Roboter weist eine Roboterbasis 1.1 auf, welche um eine erste vertikale Drehachse q₁ drehbar ist. Ein Gelenkmomentensensor dieser Achse erfasst das auf sie wirkende Drehmoment M₁. An dem Grundgestell ist ein Roboterarm 1.2 um eine zweite horizontale Drehachse q₂ drehbar gelagert bzw. angelenkt. Ein Gelenkmomentensensor dieser Achse erfasst das auf sie wirkende Drehmoment M₂. An einem Werkzeugflansch des Roboterarms ist ein Werkzeug 1.3 befestigt. Ein Kraft-Momenten-Sensor erfasst sechsachsig eine Kraft F₁, F₂ zwischen Werkzeugflansch und Werkzeug.

In einer in Fig. 1A abgebildeten Klemmsituation hat der Roboter mit seinem Werkzeug ein Hindernis gegen den Boden geklemmt, welches durch eine komprimierte Feder 2 angedeutet ist. In einer in Fig. 1B abgebildeten Klemmsituation hat der Roboter hingegen mit seinem Werkzeug ein Hindernis gegen eine vertikale Wand geklemmt, welches durch eine komprimierte Feder 2' angedeutet ist.

Das Hindernis übt im Beispiel, bedingt durch die Klemmung und/oder aktiv, beispielsweise durch ein Abstemmen gegenüber dem Werkzeug, eine Kraft auf das robotergeführte Werkzeug aus, die als F₁ bzw. F₂ zwischen Werkzeugflansch und Werkzeug erfasst wird und entsprechende Drehmomente M₁ bzw. M₂ induziert. Im Beispiel übersteigt das in den Achsen q₁ bzw. q₂ induzierte Drehmoment infolge der von dem Hindernis ausgeübten Kraft das entsprechende Drehmoment infolge der Gewichtskraft (welches in Achse q₁ gleich Null ist, da diese Achse nicht schwerkraftbelastet ist).

Bei der folgenden Erläuterung werden exemplarisch die von den Gelenkmomentensensoren der Achsen q₁, q₂ erfassten Drehmomente M₁, M₂ als Achslasten T₁, T₂ verwendet, in einer anderen Ausführung können stattdessen beispielsweise auch die Kräfte F₁, F₂ verwendet werden.

Anhand der Fig. 2 wird zunächst der Ablauf eines Verfahrens zum Steuern des Roboters nach einer komplexeren Ausführung der vorliegenden Erfindung erläutert, in der die beiden vorstehend erläuterten Aspekte einer vorgegebenen Dauer und einer Abhängigkeit von einer Achslast miteinander kombiniert sind. Wie im Anschluss daran erläutert, können beide Aspekte auch unabhängig voneinander verwirklicht werden.

In einem Schritt S5 werden überwachungsbedingt oder vorgabebedingt die Antriebe der Achsen q₁, q₂ von einer Energieversorgung getrennt und, vorzugsweise, wenn der Roboter stillsteht, ein Schließen der Haltebremsen der Achsen q₁, q₂ des Roboters kommandiert (in Fig. 2 angedeutet durch den Befehl "B → CLOSE!") oder die Haltebremsen sind überwachungsbedingt oder vorgabebedingt geschlossen (in Fig. 2 angedeutet durch den Zustand B = CLOSE).

Dann wird durch Initialisieren bzw. Inkrementieren eines Zählers in Schritten S10, S15 für beide Achsen zunächst in einem Schritt S20 jeweils geprüft, ob eine Abweichung der jeweiligen Achslast Tᵢ von einer achsenabhängigen Lastvorgabe T_{G,i} betragsmäßig einen Schwellwert T_{1,i} übersteigt. Dabei ist der Schwellwert T_{1,i}. einstellbar, die Lastvorgabe T_{G,i} eine schwerkraftbedingte Achslast, die dem durch das Eigengewicht des Roboters induzierten Moment in der jeweiligen Achse entspricht und modellbasiert ermittelt werden kann. Man erkennt, dass die Lastvorgabe T_{G,2} posenabhängig ist, insbesondere in der in Fig. 1 gezeigten horizontalen Pose maximal und in einer vertikal nach oben gestreckten oder nach unten hängenden Pose minimal ist, während die Lastvorgabe T_{G,1} verschwindet.

Falls die Abweichung den Schwellwert nicht übersteigt (S20: "N"), bleibt die entsprechende Haltebremse unbeeinflusst, insbesondere wird ihr Schließen kommandiert bzw. bleibt sie geschlossen.

Falls hingegen die Abweichung den Schwellwert übersteigt (S20: "Y"), wird in einem Schritt S25 geprüft, ob es sich um eine aktuell schwerkraftbelastete Achse handelt, indem geprüft wird, ob die schwerkraftbedingte Lastvorgabe T_{G,i} betragsmäßig einen toleranzbedingten Schwellwert T_{2,i} übersteigt.

Falls es sich um eine aktuell schwerkraftbelastete Achse handelt bzw. die schwerkraftbedingte Lastvorgabe den Schwellwert T_{2,i} übersteigt (S25: "Y"), wird in einem Schritt S30 weiter geprüft, ob die entsprechende Achslast in einer posenabhängigen, schwerkraftbedingten Lastrichtung wirkt. Hierzu wird die Achslast Tᵢ vorzeichenrichtig in ein der Schwerkraftwirkung entgegenwirkendes Hebedrehmoment T_{L,i} transformiert: solange der Roboterarm sich in den beiden rechten Quadranten der Fig. 1A befindet, insbesondere in der dargestellten vertikal nach rechts ausgestreckten Stellung zwischen diesen beiden rechten Quadranten, wird ein in Fig. 1 im Gegenuhrzeigersinn wirkendes Achsmoment Tᵢ als positives Hebedrehmoment T_{L,i} > 0 bestimmt, ein im Uhrzeigersinn wirkendes Achsmoment Tᵢ hingegen als negatives Hebedrehmoment T_{L,i} < 0. Solange der Roboterarm sich hingegen in den beiden linken Quadranten der Fig. 1A befindet, insbesondere in einer zu der dargestellten Stellung spiegelbildlichen, vertikal nach links ausgestreckten Stellung zwischen diesen beiden linken Quadranten, wird ein im Gegenuhrzeigersinn wirkendes Achsmoment Tᵢ als negatives Hebedrehmoment T_{L,i} < 0 bestimmt, ein im Uhrzeigersinn wirkendes Achsmoment Tᵢ hingegen als positives Hebedrehmoment T_{L,i} > 0.

In Schritt S30 wird entsprechend geprüft, ob dieses Hebedrehmoment T_{L,i} einen Schwellwert T_{3,i} übersteigt oder nicht. Übersteigt das Hebedrehmoment T_{L,i} den Schwellwert T_{3,i} (S30: "Y"), d.h. wirkt die Achslast als ausreichend großes, der Schwerkraftwirkung entgegenwirkendes Hebedrehmoment, so fährt das Verfahren mit Schritt S35 fort, andernfalls (S30: "N") bleibt die entsprechende Haltebremse unbeeinflusst, insbesondere wird ihr Schließen kommandiert bzw. bleibt sie geschlossen.

Handelt es sich nicht um eine aktuell schwerkraftbelastete Achse bzw. übersteigt die schwerkraftbedingte Vorgabe den Schwellwert T_{2,i} betragsmäßig nicht (S25: "N"), wird diese Prüfung gemäß Schritt S30 übersprungen und das Verfahren fährt direkt mit Schritt S35 fort.

Auf diese Weise wird anhand des Vorzeichens des Hebedrehmoments bestimmt, ob die jeweilige Achslast in der schwerkraftbedingten Lastrichtung wirkt, um den Roboteram zu heben (S30: "Y") oder nicht (30: "N").

Falls bei einer aktuell schwerkraftbelasteten Achse (S25: "Y") die Achslast in der bestimmten, posenabhängigen Lastrichtung wirkt, um den Roboteram zu heben (S30: "Y"), oder falls es sich nicht um eine aktuell schwerkraftbelastete Achse handelt (S25: "N"), fährt das Verfahren mit Schritt S35 fort, andernfalls bleibt die entsprechende Haltebremse unbeeinflusst, insbesondere wird ihr Schließen kommandiert bzw. bleibt sie geschlossen.

In Schritt S35 wird die entsprechende Haltebremse geöffnet bzw. ein Geöffnet-Bleiben der Haltebremsen kommandiert, in Fig. 2 gemeinsam angedeutet durch Bᵢ → OPEN. Zusätzlich wird ein Zeitzähler t initialisiert (t = 0).

Dieser wird inkrementiert (Schritt S40, Schritt S45: "N"), bis eine vorgegebene, achsenabhängige erste Zeitdauer t_{H,i} abgelaufen ist (S45: "Y").

Nun wird in Schritten S50 bis S60 in Schritten S20 bis S30 entsprechender Weise geprüft, ob die Abweichung immer noch den Schwellwert übersteigt (S50: "Y"), es sich um eine aktuell schwerkraftbelastete Achse handelt (S55: "Y") und dann die Achslast in der bestimmten, posenabhängigen Lastrichtung wirkt, um den Roboteram zu heben (S60: "Y"). Nur falls all diese Bedingungen erfüllt sind (S50: "Y" und S55: "Y" und S60: "Y"), fährt das Verfahren mit Schritt S65 fort, andernfalls (S50: "N" oder S55: "N" oder S60: "N") mit Schritt S80. In diesem Schritt S80 wird die entsprechende Haltebremse geschlossen (Bᵢ → CLOSE).

In Schritt S65 wird die vorgegebene Zeitdauer t_{H,i} einmalig auf t'_{H,i} verlängert und der Zeitzähler t weiter inkrementiert (Schritt S70, Schritt S55: "N"), bis auch diese verlängerte Zeitdauer t_{H,i} abgelaufen ist (S75: "Y"). Anschließend wird ebenfalls in Schritt S80 die entsprechende Haltebremse geschlossen (Bᵢ → CLOSE).

Man erkennt, dass bei diesem Verfahren die Haltebremsen jeweils für eine vorgegebene achsenabhängige Dauer t_{H,i} erneut geöffnet werden bzw. vor dem Schließen geöffnet bleiben (S35), falls die Abweichung ihrer Achslast von einer achsenabhängigen posenabhängigen, schwerkraftbedingten Lastvorgabe einen Schwellwert übersteigt (S20: "Y") und im Falle einer schwerkraftbelasteten Achse (S25: "Y") zusätzlich in einer posenabhängigen, schwerkraftbedingten Lastrichtung wirkt (S30: "Y"). Diese erste vorgegebene Dauer t_{H,i} wird verlängert (S65), wenn nach Ablauf (S45: "Y") die Abweichung weiterhin einen Schwellwert übersteigt (S50: "Y") und im Falle einer schwerkraftbelasteten Achse (S55: "Y") zusätzlich in einer posenabhängigen, schwerkraftbedingten Lastrichtung wirkt (S60: "Y"). Somit wird die Haltebremse jeweils in Abhängigkeit von einer Achslast für eine vorgegebene Dauer erneut geöffnet bzw. bleibt vor dem überwachungsbedingten Schließen geöffnet.

Wie einleitend erläutert, stellt dies eine komplexe Variante dar, in der mehrere Aspekte der vorliegenden Erfindung mehrfach kombiniert sind, insbesondere die Auswahl der klemmenden Achsen bzw. die Verlängerung der vorgegebenen Dauer in Abhängigkeit von der Achslast (S20, S30, S50, S60) mit dem erneuten Öffnen bzw. Geöffnet-Bleiben für eine vorgegebene Dauer (S40, S45, S70, S75). Anhand der Fig. 2 lassen sich auch verschiedene einfachere Varianten kompakt darstellen:
In einer Variante entfallen beispielsweise bis auf S5-S15, S35-S45 und S80 alle anderen Schritte. Dann werden einfach für alle Achsen die Haltebremsen für eine vorgegebene Dauer erneut geöffnet oder bleiben trotz des überwachungsbedingten Schließkommandos noch geöffnet.

In einer Weiterbildung dieser Variante treten die Schritte S20 und/oder S25, S30 hinzu. Dann werden bzw. bleiben nur Haltebremsen von klemmenden Achsen geöffnet (S20: "Y") bzw. werden bzw. bleiben Haltebremsen nur geöffnet (S30: "Y"), falls eine Klemmkraft ein Zusammensacken des Roboters verhindert, die jeweilige Achslast also in einer bestimmten, posenabhängigen Richtung derart wirkt, dass ein schwerkraftbedingtes Zusammensacken verhindert wird.

In einer anderen Weiterbildung dieser Variante treten die Schritte S50 und/oder S55, S60 sowie S65 bis S75 hinzu. Dann wird die vorgegebene Dauer achslastabhängig verlängert.

In einer anderen Variante entfallen die Schritte S40, S45, S65 bis S75, wobei bei Bejahung der Bedingung in Schritt S 60 stattdessen das Verfahren zu Schritt S50 zurückkehrt. Dann werden die Haltebremsen erneut geöffnet oder bleiben trotz des überwachungsbedingten Schließkommandos noch geöffnet, solange die jeweilige Achse das Hindernis klemmt (S20, S50: "Y") bzw. werden bzw. bleiben Haltebremsen geöffnet, solange eine Klemmkraft ein Zusammensacken des Roboters verhindert (S30, S60: "Y").

In einer Weiterbildung dieser Variante treten die Schritte S40, S45 oder S70, S75 hinzu, um eine zeitliche Hysterese zu implementieren.

In allen vorgenannten Varianten kann jeweils anstelle der Kombination der Schritte S20 und S25, S30 und/oder der Schritte S50 und S55, S60 jeweils nur das Überschreiten des Schwellwertes (S20, S50) oder bei schwerkraftbelasteten Achsen (S25, S55: "Y") nur die Lastrichtung (S30, S60) berücksichtigt bzw. geprüft werden.

### Bezugszeichenliste

- 1.1: Roboterbasis
- 1.2: Roboterarm
- 1.3: Roboterwerkzeug
- 2; 2': Hindernis
- 3: Steuermittel

## Patentansprüche

1. Verfahren zum Steuern eines Roboters (1.1 - 1.3) mit einer Achsenanordnung mit wenigstens einer Achse (q₁, q₂) mit einem Antrieb und einer Haltebremse, die, insbesondere überwachungsbedingt, geschlossen wird (S5, S80), **dadurch gekennzeichnet, dass** diese Haltebremse in Abhängigkeit (S20, S30, S50, S60) von einer Achslast, insbesondere für (S40, S45, S70, S75) eine vorgegebene Dauer (t_{H,i}, t'_{H,i}), erneut geöffnet wird oder vor dem Schließen geöffnet bleibt (S35), wenn die Achslast oder eine Abweichung der Achslast von einer vorgegebenen, insbesondere einstellbaren, und/oder achsen- und/oder posenabhängigen, insbesondere schwerkraftbedingten, Lastvorgabe einen vorgegebenen, insbesondere einstellbaren, und/oder achsen- und/oder posenabhängigen, insbesondere schwerkraftbedingten, Schwellwert übersteigt (S20, S50).

2. Verfahren nach dem vorhergehenden Anspruch, **dadurch gekennzeichnet, dass** die Haltebremse, insbesondere für eine vorgegebene Dauer, erneut geöffnet wird oder vor dem Schließen geöffnet bleibt, wenn die Achslast in einer, insbesondere posenabhängigen und/oder schwerkraftbedingten, Lastrichtung wirkt (S30, S60).

3. Verfahren nach einem der vorhergehenden Ansprüche, **dadurch gekennzeichnet, dass** die Dauer achsenabhängig vorgegeben wird.

4. Verfahren nach einem der vorhergehenden Ansprüche, **dadurch gekennzeichnet, dass** die Dauer höchstens 2 Sekunden beträgt.

5. Verfahren nach einem der vorhergehenden Ansprüche, **dadurch gekennzeichnet, dass** die Dauer in Abhängigkeit von einer Pose des Roboters und/oder derart vorgegeben wird, dass eine schwerkraftbedingten Bewegung der Achse begrenzt ist.

6. Verfahren nach einem der vorhergehenden Ansprüche, **dadurch gekennzeichnet, dass** die Dauer vorab oder in Abhängigkeit von einer Achslast des Roboters vorgegeben, insbesondere verlängert (S65) wird, wenn nach einer ersten vorgegebenen Dauer (t_{H,i}) die Achslast oder eine Abweichung der Achslast von einer vorgegebenen, insbesondere einstellbaren, und/oder achsen- und/oder posenabhängigen, insbesondere schwerkraftbedingten, Lastvorgabe einen vorgegebenen, insbesondere einstellbaren, und/oder achsen- und/oder posenabhängigen, insbesondere schwerkraftbedingten, Schwellwert übersteigt und/oder die Achslast in einer, insbesondere posenabhängigen und/oder schwerkraftbedingten, Lastrichtung wirkt.

7. Verfahren nach dem vorhergehenden Anspruch, **dadurch gekennzeichnet, dass** die, insbesondere erste und/oder verlängerte, Dauer für wenigstens eine wenigstens potentiell schwerkraftbelastete Achse kürzer vorgegeben wird als für wenigstens eine nicht schwerkraftbelastete Achse.

8. Verfahren nach einem der vorhergehenden Ansprüche, **dadurch gekennzeichnet, dass** die Haltebremse erneut geöffnet wird oder vor dem Schließen geöffnet bleibt, während der Antrieb der Achse überwachungsbedingt wirkungslos, insbesondere von einer Energieversorgung getrennt, ist und/oder der Roboter, wenigstens im Wesentlichen stillsteht.

9. Steuermittel (3) zum Steuern eines Roboters (1.1 -1.3) mit einer Achsenanordnung mit wenigstens einer Achse (q₁, q₂) mit einem Antrieb und einer Haltebremse, mit einem Haltebremsenschließmittel, insbesondere einem Überwachungsmittel (3), zum Kommandieren eines Schließens der Haltebremse (S5) und einem Haltebremsenöffnungsmittel (3) zum erneuten Öffnen oder Verzögern des Schließens der Haltebremse (S35) in Abhängigkeit von einer Achslast und/oder für eine vorgegebene Dauer, **dadurch gekennzeichnet, dass** das Steuermittel zum Ausführen eines Verfahrens nach einem der vorhergehenden Ansprüche eingerichtet ist.

10. Roboteranordnung mit einem Roboter, insbesondere Knickarmroboter (1.1-1.3), mit einer Achsenanordnung mit wenigstens einer, insbesondere wenigstens sechs, Achsen (q₁, q₂) mit je einem Antrieb und einer Haltebremse, und mit einem Steuermittel (3) zum Steuern des Roboters nach dem vorhergehenden Anspruch.

11. Computerprogrammprodukt mit einem Programmcode, der auf einem von einem Computer lesbaren Medium gespeichert ist, und der bewirkt, dass das Steuermittel des Anspruchs 9 die Verfahrensschritte nach einem der Ansprüche 1 bis 8 ausführt.

## Claims

1. A method of controlling a robot (1.1 - 1.3), the robot (1.1 - 1.3) having an axis arrangement comprising at least one axis (q₁, q₂) with a drive and a holding brake which is closed (S5, S80), in particular as a result of a monitoring process, **characterised in that** this holding brake is opened again (S35) as a function (S20, S30, S50, S60) of an axial load, in particular for (S40, S45, S70, S75) a specified period of time (t_{H,i}, t'_{H,i}), or remains open (S35), in particular for (S40, S45, S70, S75) a specified period of time (t_{H,i}, t'_{H,i}), before being closed, if the axial load exceeds a specified threshold value, in particular an adjustable threshold value, and / or an axis-dependent and / or a pose-dependent threshold value, in particular a gravity-dependent threshold value, or if a deviation of the axial load from a specified load specification, in particular from an adjustable load specification and / or from an axis-dependent and / or from a pose-dependent load specification, in particular from a gravity-dependent load specification, exceeds a specified threshold value, in particular an adjustable threshold value and / or an axis-dependent and / or a pose-dependent threshold value, in particular a gravity-dependent threshold value (S20, S50).

2. The method according to the preceding claim, **characterised in that** the holding brake is opened again, in particular for a specified period of time, or remains open, in particular for a specified period of time, before being closed, when the axial load acts in a load direction, in particular in a pose-dependent and / or gravity-dependent load direction (S30, S60).

3. The method according to any one of the preceding claims, **characterised in that** the period of time is specified in an axis-dependent manner.

4. The method according to any one of the preceding claims, **characterised in that** the period of time is at most 2 seconds.

5. The method according to any one of the preceding claims, **characterised in that** the period of time is specified as a function of a pose of the robot and / or is specified in such a way that a movement of the axis, the movement being caused by gravity, is limited.

6. The method according to any one of the preceding claims, **characterised in that** the period of time is specified in advance or as a function of an axial load of the robot, and in particular that it is extended (S65) if, after a first specified period of time (t_{H,i}), the axial load exceeds a specified threshold value, in particular an adjustable threshold value, and / or an axis-dependent and / or a pose-dependent threshold value, in particular a gravity-dependent threshold value, or if a deviation of the axial load from a specified load specification, in particular from an adjustable load specification and / or from an axis-dependent and / or from a pose-dependent load specification, in particular from a gravity-dependent load specification, exceeds a specified threshold value, in particular an adjustable threshold value and / or an axis-dependent and / or a pose-dependent threshold value, in particular a gravity-dependent threshold value, and / or the axial load acts in a load direction, in particular in a pose-dependent and / or in a gravity-dependent load direction.

7. The method according to the preceding claim, **characterised in that** the period of time, in particular the first period of time and / or the extended period of time, for at least one axis that is at least potentially subjected to a gravity-dependent load is set shorter than for at least one axis that is not subjected to a gravity-dependent load.

8. The method according to any one of the preceding claims, **characterised in that** the holding brake is opened again, or remains open before being closed, while the drive of the axis is inoperative as a result of a monitoring process, in particular while it is disconnected from a power supply, and / or while the robot is at least substantially at a standstill.

9. A control means (3) for controlling a robot (1.1 - 1.3), the robot (1.1 - 1.3) having an axis arrangement comprising at least one axis (q₁, q₂) with a drive and a holding brake, with a means for closing the holding brake, in particular a monitoring means (3), for giving a command for a closing of the holding brake (S5), and a means (3) for opening the holding brake for opening the holding brake again or for delaying the closing of the holding brake (S35) as a function of an axial load and / or for a specified period of time, **characterised in that** the control means is arranged for carrying out a method in accordance with any one of the preceding claims.

10. A robot arrangement comprising a robot, in particular an articulated arm robot (1.1 - 1.3), the robot (1.1 - 1.3) having an axis arrangement comprising at least one axis (q₁, q₂), in particular at least six axes (q₁, q₂), each of which having a drive and a holding brake, and with a control means (3) for controlling the robot in accordance with the preceding claim.

11. A computer program product comprising a program code which is stored on a computer readable medium and which is arranged to cause the control means of claim 9 to carry out the method steps in accordance with any one of the claims 1 to 8.

## Revendications

1. Procédé de commande destiné à commander un robot (1.1 - 1.3) avec un agencement d'axe avec au moins un axe (q₁, q₂) avec un entraînement et un frein de retenue qui est fermé, en particulier en étant soumis à surveillance, (S5, S80), **caractérisé en ce que** ce frein de retenue est de nouveau ouvert en fonction (S20, S30, S50, S60) d'une charge d'axe, en particulier pour (S40, S45, S70, S75) une durée prédéfinie (t_{H,i}, t'_{H,i}) ou reste ouvert avant la fermeture (S35), lorsque la charge d'axe ou un écart de la charge d'axe d'une prescription de charge prédéfinie, en particulier réglable, et/ou dépendant de l'axe et/ou de la posture, en particulier soumise à la force de gravité dépasse une valeur seuil prédéfinie, en particulier réglable, et/ou dépendant de l'axe et/ou de la posture, en particulier soumise à la force de gravité (S20, S50).

2. Procédé selon la revendication précédente, **caractérisé en ce que** le frein de retenue, est de nouveau ouvert ou reste ouvert avant la fermeture, en particulier pour une durée prédéfinie, lorsque la charge d'axe agit dans un sens de charge en particulier dépendant de la posture et/ou soumis à la force de gravité (S30, S60).

3. Procédé selon l'une quelconque des revendications précédentes, **caractérisé en ce que** la durée est prédéfinie en fonction de l'axe.

4. Procédé selon l'une quelconque des revendications précédentes, **caractérisé en ce que** la durée s'élève au plus à 2 secondes.

5. Procédé selon l'une quelconque des revendications précédentes, **caractérisé en ce que** la durée est prédéfinie en fonction d'une posture du robot et/ou de telle manière qu'un mouvement soumis à la force de gravité de l'axe soit limité.

6. Procédé selon l'une quelconque des revendications précédentes, **caractérisé en ce que** la durée est prédéfinie au préalable ou en fonction d'une charge d'axe du robot, en particulier prolongée (S65) lorsqu'après une première durée prédéfinie (t_{H,i}) la charge d'axe ou un écart de la charge d'axe d'une prescription de charge prédéfinie, en particulier réglable et/ou dépendant de l'axe et/ou de la posture, en particulier soumise à la force de gravité dépasse une valeur seuil prédéfinie, en particulier réglable, et/ou dépendant de l'axe et/ou de la posture, en particulier soumise à la force de gravité et/ou la charge d'axe agit dans un sens de charge en particulier dépendant de la posture et/ou soumise à la force de gravité.

7. Procédé selon la revendication précédente, **caractérisé en ce que** la durée, en particulier première et/ou prolongée, pour au moins un axe sollicité par la force de gravité au moins potentiellement est prédéfinie plus courte que pour au moins un axe non sollicité par la force de gravité.

8. Procédé selon l'une quelconque des revendications précédentes, **caractérisé en ce que** le frein de retenue est de nouveau ouvert ou reste ouvert avant la fermeture, alors que l'entraînement de l'axe est sans action en étant soumis à la surveillance, en particulier séparé d'une alimentation d'énergie et/ou le robot s'arrête au moins sensiblement.

9. Moyen de commande (3) destiné à la commande d'un robot (1.1 - 1.3) avec un agencement d'axe avec au moins un axe (q₁, q₂) avec un entraînement et un frein de retenue, avec un moyen de fermeture de frein de retenue, en particulier un moyen de surveillance (3), pour la commande d'une fermeture du frein de retenue (S5) et un moyen d'ouverture de frein de retenue (3) pour la nouvelle ouverture ou le retard de la fermeture du frein de retenue (S35) en fonction d'une charge d'axe et/ou pour une durée prédéfinie, **caractérisé en ce que** le moyen de commande est conçu pour la réalisation d'un procédé selon l'une quelconque des revendications précédentes.

10. Agencement de robot avec un robot, en particulier robot à bras articulé (1.1 - 1.3) avec un agencement d'axe avec au moins un, en particulier au moins six axes (q₁, q₂) avec chacun un entraînement et un frein de retenue, et avec un moyen de commande (3) pour la commande du robot selon la revendication précédente.

11. Produit de programme informatique avec un code de programme qui est enregistré sur un support lisible par un ordinateur et qui entraîne la réalisation par le moyen de commande de la revendication 9 des étapes de procédé selon l'une quelconque des revendications 1 à 8.
